# DEMANDE DE BREVET EUROPEEN

(11) **EP 4 203 126 A2**
(43) Date de publication de la demande: **28.06.2023**
(21) Numéro de dépôt: 22214541.9
(22) Date de dépôt: 19.12.2022
(51) Int. Cl.: H01M 10/04, H01M 50/103, H01M 50/119, H01M 50/209, H01M 50/264

(54) **MODULE ÉLECTROCHIMIQUE, PROCÉDÉ DE FABRICATION ET ASSEMBLAGE ÉLECTROCHIMIQUE CORRESPONDANTS**

(30) Priorité: 20.12.2021 FR 2114005
(71) Demandeur: SAFT, 92300 Lavallois-Perret (FR)
(72) Inventeur: PHILIPPE, Sébastien, 33127 SAINT JEAN D'ILLAC (FR)
(74) Mandataire: Lavoix

(57) **Abrégé**

Ce Module électrochimique (6), comprend deux cellules électrochimiques (30) chacune munie d'un conteneur (34) et une bande de liaison (32) reliant les cellules électrochimiques. Chaque cellule électrochimique est munie de deux surfaces frontales (38) et deux surfaces latérales (40).

La bande de liaison comprend un substrat (50) et une couche adhésive (52). La couche adhésive s'applique sur les surfaces latérales (40) des cellules électrochimiques et sur une surface frontale (38), qui est une surface frontale d'extrémité (44), de deux des cellules électrochimiques.

Application aux assemblages électrochimiques.

## Description

La présente invention concerne un module électrochimique, du type comprenant
- au moins deux cellules électrochimiques chacune munie d'un conteneur et
- une bande de liaison reliant les cellules électrochimiques,
chaque cellule électrochimique étant munie de deux surfaces frontales et deux surfaces latérales.

On connaît de la demande de brevet WO2012/009145 un module électrochimique comprenant un empilement d'une pluralité de cellules électrochimiques et un ruban de retenue, ruban qui est adapté pour maintenir les cellules électrochimiques les unes par rapport aux autres. Le ruban de retenue s'étend autour de l'empilement de cellules électrochimiques et applique une force de compression sur cet empilement de cellules.

Un autre module électrochimique est connu de US10186729B2. Ce document divulgue un module électrochimique comprenant un empilement de cellules électrochimiques et un ruban de retenue en matière réticulable s'étendant autour de l'empilement. Le ruban de retenue a une faible largeur et s'étend autour de l'empilement selon une pluralité de couches superposées. Le ruban de retenue applique une force de compression sur l'empilement de cellules électrochimiques.

DE102013217903 divulgue un module électrochimique comprenant un empilement de cellules électrochimiques qui est entouré d'un ruban de liaison. Le ruban de liaison applique une force de compression sur l'empilement de cellules électrochimiques.

US8785018B2 décrit un module de batterie électrochimique. EP2492992A1 divulgue un ruban adhésif pour une cellule électrochimique qui est destiné à être utilisé à l'intérieur d'une telle cellule. WO2012088050A1 (EP2656431) décrit un module de cellules électrochimiques. WO2012041588A1 (EP2622668) décrit un procédé de serrer un accumulateur de Li-lon et un accumulateur Li-lon correspondant. DE102008059966A1 divulgue une batterie comprenant plusieurs cellules de batterie agencées en un ensemble de cellules. US2006093890A1 décrit un système de compression d'un empilement de piles à combustibles. EP1760806A2 décrit un module de batterie.

Les modules de cellules électrochimiques connus sont compliqués à assembler, ont un coût de fabrication élevé et des dimensions élevées pour une puissance et capacité électrique donnée.

L'invention a pour but de proposer un module électrochimique qui soit en particulier économique à fabriquer et compact.

A cet effet, l'invention a pour objet un module tel qu'indiqué ci-dessus, caractérisé en ce que la bande de liaison comprend un substrat et une couche adhésive, et en ce que la couche adhésive s'applique sur les surfaces latérales des cellules électrochimiques et sur une surface frontale, qui est une surface frontale d'extrémité, de deux des cellules électrochimiques.

Selon des modes de réalisation particuliers du module, celui-ci peut comporter l'une ou plusieurs des caractéristiques suivantes :
- le substrat est un ruban en matière plastique, notamment en PET ou en polycarbonate, et l'adhésif de la couche adhésive est un autoadhésif ou un adhésif sensible à la pression ;
- la bande de liaison s'applique selon une seule couche sur au moins l'une des cellules électrochimiques, et de préférence sur au moins toutes les cellules électrochimiques à part l'une des cellules électrochimiques ;
- la bande de liaison a une largeur de bande (LB) qui est sensiblement identique à une hauteur (HC) des cellules électrochimiques ;
- les surfaces latérales sont les surfaces de côté de chaque cellule électrochimique ;
- le nombre de cellules électrochimiques est comprise entre 4 et 20, de préférence comprise entre 10 et 14 ;
- le conteneur est de forme prismatique et comprend une paroi de conteneur, dans lequel notamment l'épaisseur de la paroi de conteneur est comprise entre 0,40 mm et 0,60 mm, et dans lequel le conteneur est en métal, de préférence en Aluminium ; et
- chaque cellule électrochimique comprend une gaine extérieure entourant le conteneur et formant au moins la surface frontale de cette cellule électrochimique.

L'invention a également pour objet un procédé de fabrication d'un module électrochimique tel que défini ci-dessus, comprenant les étapes successives :
- Fourniture des cellules électrochimiques et de la bande de liaison,
- Disposition des cellules électrochimiques l'une à côté de l'autre en formant un empilement de cellules électrochimiques, et
- Enroulement de la bande de liaison autour de l'empilement de cellules électrochimiques.

L'invention a également pour objet un assemblage électrochimique comprenant
- un châssis,
- au moins deux modules électrochimiques disposés dans le châssis adjacent l'un de l'autre,
- le châssis étant muni d'un dispositif de reprise de tolérances de fabrication, adapté pour compenser un écart éventuel entre une paroi d'extrémité du châssis et les modules électrochimiques,
caractérisé en ce que les modules électrochimiques sont des modules tels que définis ci-dessus.

L'invention sera mieux comprise à la lecture de la description qui va suivre, donnée uniquement à titre d'exemple et faite en se référant aux dessins annexés, sur lesquels :
[Fig 1] La Figure 1 montre un assemblage électrochimique selon l'invention, à l'état assemblé;

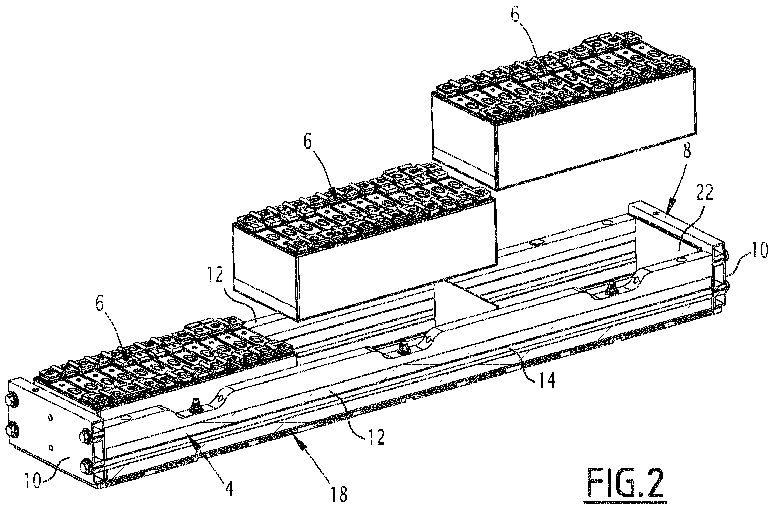

[Fig 2] La Figure 2 montre l'assemblage électrochimique de la Figure 1 lors de l'assemblage des modules électrochimiques selon l'invention dans le châssis;
[Fig 3] La Figure 3 est une vue agrandie d'un module électrochimique de l'assemblage électrochimique des Figures 1 et 2; et
[Fig 4] La Figure 4 est une vue partiellement éclatée du module électrochimique de la Figure 3.

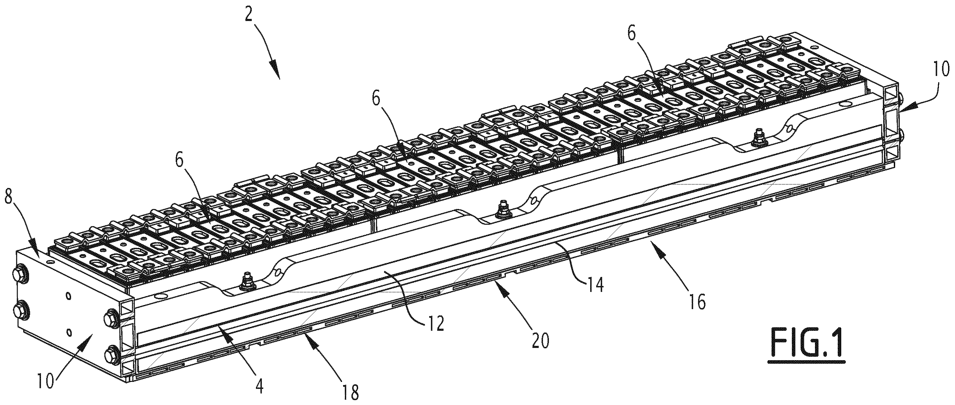

Sur la Figure 1 est représentée un assemblage électrochimique selon l'invention, désigné par la référence générale 2.

L'assemblage électrochimique 2 comprend un châssis 4, trois modules électrochimiques 6 disposés dans le châssis 4 adjacent l'un de l'autre. Le châssis 4 est muni d'un dispositif de reprise 8 de tolérances de fabrication.

Le ou chaque module électrochimique 6 a en l'occurrence une forme sensiblement parallélépipède rectangle. Les modules électrochimiques 6 de l'assemblage électrochimique 2 sont disposés dans le châssis 4 de sorte telle que des petites faces du parallélépipède de deux modules électrochimiques adjacents sont dirigées l'une vers l'autre. Les petites faces des modules électrochimiques 6 correspondent donc en l'occurrence aux surfaces frontales 38 d'une des cellules électrochimiques et donc aux grandes faces du prisme ou du parallélépipède de ces cellules électrochimique 30 (voir ci-après).

Le nombre de modules électrochimiques 6 de l'assemblage électrochimique peut être différent de trois, par exemple être de deux, quatre ou cinq.

Le châssis 4 comprend en l'occurrence deux parois de châssis d'extrémité 10 et deux parois de châssis latérales 12. Les parois de châssis d'extrémité 10 peuvent être serrées l'une vers l'autre par des tirants 14, en l'occurrence des vis de traction.

Le châssis 4 est muni par ailleurs d'une paroi de fond 16, qui constitue par exemple une plaque de refroidissement 18 des modules électrochimiques 6. La plaque de refroidissement 18 peut être munie d'un circuit de fluide refroidissement 20.

Le dispositif de reprise 8 des tolérances de fabrication compense un écart éventuel entre la paroi d'extrémité 10 et les modules électrochimiques 6, résultant de la chaine de côtes des composants disposés les uns à côté des autres.

Le dispositif de reprise 8 comprend au moins une cale 22 qui est une plaque ayant une épaisseur qui correspond sensiblement à l'écart cumulé entre tous les modules électrochimiques 6 et les parois de châssis d'extrémité 10. Le dispositif de reprise 8 peut comprendre plusieurs cales 22.

La cale 22 est disposée entre la paroi de châssis d'extrémité 10 et le module électrochimique 6 qui est adjacent à cette paroi de châssis d'extrémité 10.

Chacun des modules électrochimiques 6 est de préférence identique en ce qui concerne les caractéristiques décrites ci-après.

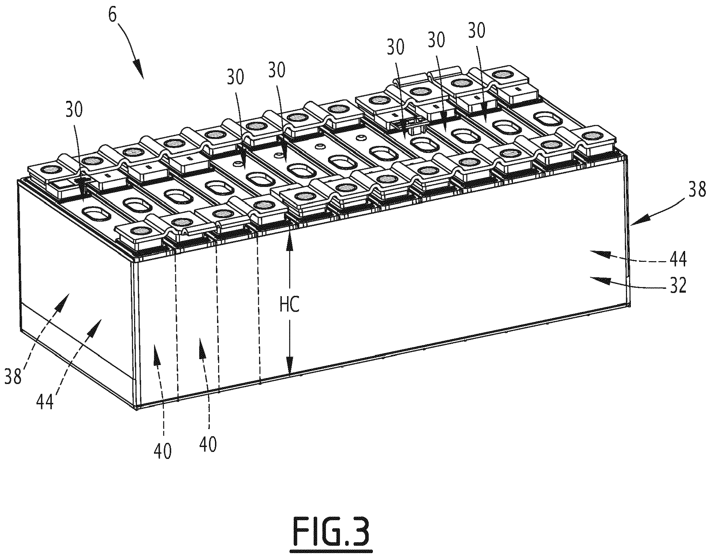

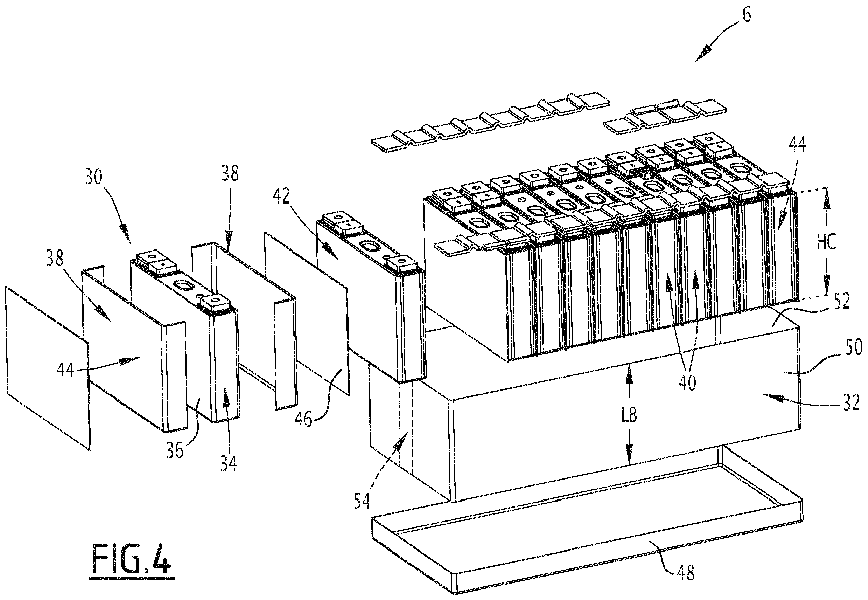

Le module électrochimique 6 comprend au moins deux cellules électrochimiques 30 et une bande de liaison 32 reliant les cellules électrochimiques entre elles (voir Figures 3 et 4). En l'occurrence, le module électrochimique 6 ne comprend qu'une seule bande de liaison 32, et ne comporte donc pas deux ou plus de deux bandes de liaison 32. En variante, le module électrochimique 6 peut comprendre deux bandes de liaison 32 et ne comportant pas plus de deux bandes de liaison 32.

Le nombre de cellules électrochimiques 30 dans chaque module électrochimique peut être compris par exemple entre 4 et 20, et est de préférence compris entre 10 et 14. En l'occurrence chaque module électrochimique 6 comprend exactement douze cellules électrochimiques 30.

Chacune des cellules électrochimiques 30 est une cellule électrochimique rechargeable et est de préférence de type Lithium-Ion.

Chacune des cellules électrochimiques 30 est munie d'un conteneur 34. Le conteneur 34, et donc la cellule électrochimique 30, a avantageusement une forme prismatique, notamment une forme générale de parallélépipède, en particulier parallélépipède rectangle. Chaque conteneur 34 comprend une paroi de conteneur 36.

Le conteneur 34 est avantageusement du type rigide. L'épaisseur de la paroi de conteneur 36 peut être comprise entre 0,40 mm et 0,60 mm. Le conteneur peut être en métal, de préférence en Aluminium ou en un alliage à base d'aluminium.

Chaque cellule électrochimique 30 est munie de deux surfaces frontales 38. Les surfaces frontales 38 sont celles qui se trouvent en face ou à l'opposé d'une cellule électrochimique 30 adjacente. En l'occurrence, les deux surfaces frontales 38 correspondent aux grandes faces du prisme ou du parallélépipède du conteneur 34.

Chaque cellule électrochimique a une hauteur HC, qui est en l'occurrence la longueur du petit côté de la surface frontale 38.

Chaque cellule électrochimique 30 est munie de deux surfaces latérales 40. Les surfaces latérales 40 sont des surfaces libres lorsque les cellules électrochimiques 6 sont empilées selon leur surfaces frontales. En l'occurrence, les deux surfaces latérales 40 sont les surfaces de côté de la cellule électrochimique. Par ailleurs, les deux surfaces latérales 40 correspondent aux petites faces du prisme ou du parallélépipède. Les deux surfaces latérales 40 sont dépourvues de bornes de connexion.

En variante, les deux surfaces latérales 40 sont la surface de fond et la surface de connexion de la cellule électrochimique 30.

La cellule électrochimique 30 est également munie de bornes de connexion sur l'une de ses surfaces.

La cellule électrochimique 30 comprend en l'occurrence une gaine extérieure 42 en matière plastique, par exemple en PET, entourant le conteneur 34 ou la paroi de conteneur 36. La gaine extérieure 42 forme en l'occurrence les surfaces frontales 38 de la cellule électrochimique 30. Dans le cas présent, la gaine extérieure 42 forme également les surfaces latérales 40 de la cellule électrochimique 30.

En variante, par exemple lorsque la cellule électrochimique 30 est dépourvue de gaine extérieure 42, les surfaces frontales 38 et éventuellement les surfaces latérales 40 sont formées par le conteneur 34.

Lorsque les cellules électrochimiques 30 du module électrochimique 6 sont à l'état empilé, deux cellules électrochimiques 30 sont des cellules électrochimiques d'extrémité. L'une des surfaces frontales de chacune de ces deux cellules électrochimiques d'extrémité est une surface frontale d'extrémité 44, qui est une surface frontale libre.

Le module électrochimique comprend en outre à chaque fois entre deux cellules électrochimiques 30, une feuille intercalaire 46, qui est par exemple en céramique ou en un matériau compressible. Chaque feuille intercalaire 46 est adaptée pour compenser le gonflement et le dégonflement des cellules électrochimiques 30 lors de leur chargement électrique et de leur déchargement électrique. L'épaisseur de chaque feuille intercalaire 46, à l'état non-comprimé, peut être comprise entre 0,5mm et 3,0mm. En variante, les feuilles intercalaires 46 peuvent être omises en partie ou totalement.

Le module électrochimique 6 comprend en l'occurrence par ailleurs un bac de fond 48, qui est en un matériau électriquement isolant et qui recouvre une surface de fond de chaque conteneur 34. Le bac de fond 48, en particulier un rebord de ce bac de fond 48, est recouvert par la bande de liaison 32.

La bande de liaison 32 comprend un substrat 50 et une couche adhésive 52. La bande de liaison 32 est notamment constituée du substrat 50 et de la couche adhésive 52.

Le substrat 50 est un ruban, par exemple en matière plastique, notamment en PET ou en polycarbonate, ou PVC, avantageusement en une seule couche.

L'épaisseur du substrat 50 ou du ruban peut être comprise entre 0,20 mm et 0,70 mm, de préférence comprise entre 0,25 mm et 0,50 mm.

La bande de liaison 32 a une largeur de bande LB qui est avantageusement sensiblement identique à la hauteur HC des cellules électrochimiques 6. En l'occurrence la largeur de bande LB est sensiblement identique à une hauteur des conteneurs 34. La bande de liaison 32 est également alignée avec des bords des surfaces frontales 38 et des surfaces latérales 40.

L'adhésif de la couche adhésive 52 est un autoadhésif ou un adhésif sensible à la pression. De tels bandes sont par exemple commercialisés par la société NITTO de type acrylique double-face.

Avantageusement, la couche adhésive 52 couvre sensiblement toute la surface du substrat sur un seul côté de ce substrat 50.

La capacité d'adhésion de l'adhésif, sa quantité et sa surface d'application sur les cellules électrochimiques sont suffisamment importantes pour que le module électrochimique reste intégral sous son propre poids lors d'une manipulation.

La couche adhésive 52 s'applique sur les surfaces latérales 40 des cellules électrochimiques et sur les deux surfaces frontales d'extrémité 44. Avantageusement, la couche adhésive 52 s'applique sur toutes les surfaces latérales 40 des cellules électrochimiques 30. En outre, avantageusement, la couche adhésive 52 couvre sensiblement la totalité de la surface latérale 40.

La bande de liaison 32 s'applique, notamment exclusivement, selon une seule couche sur au moins l'une des cellules électrochimiques 6. De préférence, la bande de liaison 32 s'applique sur toutes les cellules électrochimiques 6 sauf l'une des cellules électrochimiques, notamment exclusivement, selon une seule couche. Dans le cas présent, la bande de liaison 32 forme une zone de chevauchement 54 aux extrémités de cette bande de liaison, zone de chevauchement dans laquelle les extrémités de la bande de liaison 32 sont superposées.

Les cellules électrochimiques 30 du module électrochimique 6 sont, avant l'assemblage dans le châssis, reliées entre elles uniquement et exclusivement par la bande de liaison 32. En particulier, le module électrochimique 6 ne comporte pas de cadre qui entoure individuellement ce module électrochimique 6. La bande de liaison 32 constitue donc des surfaces extérieures du module électrochimique 6.

En variante non représentée, le conteneur 34 est du type « pouch », donc à paroi relativement souple. L'épaisseur de la paroi de conteneur 36 peut dans ce cas être comprise entre 0,20mm et 0,39 mm. Le conteneur peut être en métal, de préférence en Aluminium ou en un alliage à base d'aluminium

Le module électrochimique 6 est fabriqué selon un procédé de fabrication comprenant les étapes successives :
a) fourniture des cellules électrochimiques et de la bande de liaison,
b) disposition des cellules électrochimiques l'une à côté de l'autre, respectivement les unes à côté des autres, en formant un empilement de cellules électrochimiques, et
c) enroulement de la bande de liaison autour de l'empilement de cellules électrochimiques en obtenant le module électrochimique 6.

Lors de la formation de l'empilement à l'étape b), dans le cas présent, les feuilles intercalaires 46 sont intercalées entre deux cellules électrochimiques 30 adjacentes.

Lors de l'enroulement de la bande de liaison 32 autour de l'empilement de cellules électrochimiques, la bande de liaison est collée sur chacune des surfaces latérales et sur les surface frontales d'extrémité.

L'assemblage électrochimique est fabriqué selon un procédé comprenant les étapes suivantes :
- fourniture du châssis 4 ;
- fourniture des modules électrochimiques 6 ; et
- insertion des modules électrochimiques 6 dans le châssis.

Pendant l'insertion, la bande de liaison 32 seule maintient les cellules électrochimiques 30 les unes par rapport aux autres.

La description qui précède contient des caractéristiques techniques de l'invention. Les caractéristiques techniques décrites dans la présente description, bien que présentées dans un contexte technique et éventuellement en combinaison avec d'autres caractéristiques techniques, peuvent être utilisées à chaque fois individuellement, sans les autres caractéristiques techniques, pour autant que ceci soit techniquement possible.

## Revendications

1. Module électrochimique (6), du type comprenant
- au moins deux cellules électrochimiques (30) chacune munie d'un conteneur (34) et
- une bande de liaison (32) reliant les cellules électrochimiques,
chaque cellule électrochimique étant munie de deux surfaces frontales (38) et deux surfaces latérales (40),
**caractérisé en ce que**
la bande de liaison comprend un substrat (50) et une couche adhésive (52), et **en ce que**
la couche adhésive s'applique sur les surfaces latérales (40) des cellules électrochimiques et sur une surface frontale (38), qui est une surface frontale d'extrémité (44), de deux des cellules électrochimiques.

2. Module électrochimique selon la revendication 1 dans lequel le substrat (50) est un ruban en matière plastique, notamment en PET ou en polycarbonate, et dans lequel l'adhésif de la couche adhésive (52) est un autoadhésif ou un adhésif sensible à la pression.

3. Module électrochimique selon la revendication 1 ou 2, dans lequel la bande de liaison (32) s'applique selon une seule couche sur au moins l'une des cellules électrochimiques (30), et de préférence sur au moins toutes les cellules électrochimiques à part l'une des cellules électrochimiques.

4. Module électrochimique selon l'une des revendications 1 à 3, dans lequel la bande de liaison (32) a une largeur de bande (LB) qui est sensiblement identique à une hauteur (HC) des cellules électrochimiques.

5. Module électrochimique selon l'une des revendications 1 à 4, dans lequel les surfaces latérales (40) sont les surfaces de côté de chaque cellule électrochimique.

6. Module électrochimique selon l'une des revendications 1 à 5, dans lequel le nombre de cellules électrochimiques (6) est comprise entre 4 et 20, de préférence comprise entre 10 et 14.

7. Module électrochimique selon l'une des revendications 1 à 6, dans lequel le conteneur (34) est de forme prismatique et comprend une paroi de conteneur (36), dans lequel notamment l'épaisseur de la paroi de conteneur est comprise entre 0,40 mm et 0,60 mm, et dans lequel le conteneur est en métal, de préférence en Aluminium.

8. Module électrochimique selon l'une des revendications 1 à 7, dans lequel chaque cellule électrochimique comprend une gaine extérieure (42) entourant le conteneur et formant au moins la surface frontale (38) de cette cellule électrochimique.

9. Procédé de fabrication d'un module électrochimique selon l'une des revendications précédentes, comprenant les étapes successives :
- Fourniture des cellules électrochimiques (6) et de la bande de liaison (32),
- Disposition des cellules électrochimiques l'une à côté de l'autre en formant un empilement de cellules électrochimiques, et
- Enroulement de la bande de liaison (32) autour de l'empilement de cellules électrochimiques.

10. Assemblage électrochimique comprenant
- un châssis (4),
- au moins deux modules électrochimiques (6) disposés dans le châssis adjacent l'un de l'autre,
- le châssis étant muni d'un dispositif de reprise (8) de tolérances de fabrication, adapté pour compenser un écart éventuel entre une paroi d'extrémité (10) du châssis et les modules électrochimiques (6),
**caractérisé en ce que** les modules électrochimiques sont des modules selon l'une des revendications 1 à 8.
